(19) Europäisches Patentamt
European Patent Office
Office européen des brevets

(11) EP 0 645 264 B1

(12) **EUROPÄISCHE PATENTSCHRIFT**

(45) Veröffentlichungstag und Bekanntmachung des Hinweises auf die Patenterteilung:
**27.11.1996 Patentblatt 1996/48**

(51) Int. Cl.$^6$: **B60C 11/00**

(21) Anmeldenummer: **94115000.5**

(22) Anmeldetag: **23.09.1994**

(54) **Profilierter Fahrzeugreifen und Verfahren zum Bemessen des optimalen Phasenversatzes zwischen nebeneinander angeordneten Laufflächenteilen**

Tread pattern and process for measuring the optimum phase shift between consecutive tread section

Profil de pneumatique et procédé de mesure de déphasage optimum entre des parties adjacentes de la bande de roulement

(84) Benannte Vertragsstaaten:
**DE ES FR GB LU**

(30) Priorität: **27.09.1993 DE 4332811**

(43) Veröffentlichungstag der Anmeldung:
**29.03.1995 Patentblatt 1995/13**

(73) Patentinhaber: **Continental Aktiengesellschaft
30165 Hannover (DE)**

(72) Erfinder:
- **Schulze, Thomas, Dr.
D-30173 Hannover (DE)**
- **Roik, Geert
D-38162 Cremlingen (DE)**
- **Kleinhoff, Klaus
D-31552 Rodenberg (DE)**
- **Hahn, Michael
D-30659 Hannover (DE)**

(56) Entgegenhaltungen:
**EP-A- 0 246 997** **EP-A- 0 528 577**
**EP-A- 0 541 004** **EP-A- 0 542 493**

- **PATENT ABSTRACTS OF JAPAN vol. 13 no. 458 (M-880) [3806] ,17.Oktober 1989 & JP-A-01 178005 (BRIDGESTONE CORP.) 14.Juli 1989,**

EP 0 645 264 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Rank Xerox (UK) Business Services
2.13.8/3.4

## Beschreibung

Die Erfindung bezieht sich auf einen Fahrzeugreifen mit einer profilierten Lauffläche, auf deren Umfang Profilschritte (pitches) mindestens zweier unterschiedlicher Längen angeordnet sind, wobei die Lauffläche axial in mehrere Teile unterteilt ist und die aufeinanderfolgenden Schrittlängen in jedem der axialen Teile eine Schrittfolge bilden.

Es sind ältere Vorschläge bekannt, die Lauffläche in eine linke und eine rechte Hälfte aufzuteilen und trotz gleicher Profilmuster (in der Definition der DE-OS 41 36 226.8, die dem Oberbegriff des Anspruchs 1 entspricht, siehe deren Seite 2, Zeile 50 bis Seite 3, Zeile 6) mit verschiedenen Pitch-Folgen auszustatten. Diese Schrittfolgen können sich auch in ihrer Schrittanzahl voneinander unterscheiden.

Bei diesen Vorschlägen trägt jede Laufflächenhälfte etwa die Hälfte zur insgesamt abgestrahlten Schallleistung bei; durch Kohärenzvermeidung soll es jedoch teilweise zu Auslöschungen kommen und überdies soll das Frequenzspektrum noch stärker einem gleichmäßigen Rauschen angenähert werden, welches bei gleicher Schallleistung bei längerer Einwirkungsdauer als weniger störend empfunden wird als ein tonales Geräusch, das heißt als ein Geräusch, dessen Schallleistung sich im wesentlichen auf Frequenzen konzentriert, die in einem ganzzahligen Verhältnis zu einer Grundfrequenz stehen.

Der vorliegenden Erfindung geht es nicht primär um eine weitere Verbesserung des vom Reifen und von der Kontaktfläche Reifen-Fahrbahn emittierten Geräusche sondern darum, die Radialkraftschwankungen, die durch Körperschallübertragung Radaufhängungs- und Karrosserieteile zu Vibrationen anregen können, weiter zu senken.

Die Aufgabe wird erfindungsgemäß durch die kennzeichnenden Merkmale des Anspruches 1 oder 9 gelöst, also dadurch, daß die Phasenzuordnung zwischen den Pitchfolgen der verschiedenen Laufflächenteile so bemessen ist, daß der Abstand zwischen den absoluten Extrema der Summe der gewichteten Abbildungen je einer nachfolgend definierten Funktion minimal ist oder höchstens 25% größer als dieses Minimum ist. Dabei ist jedem Laufflächenteil eine Funktion zugeordnet, welche die aneinander anschließende Abtragung der aufeinander folgenden Schritte des betreffenden Laufflächenteiles auf der Abszisse bei Abtragung der jeweiligen Schrittlänge von der Abszisse aus auf der Ordinate ist. Von jeder dieser Funktionen wird eine "Abbildung" bestimmt, die sich für die technischen Fachleute am leichtesten definieren läßt als Restfunktion nach Elemination aller harmonischen Anteile von größerem als dem x. Rang, wobei x eine ganze Zahl zwischen 8 und 14 ist.

Bekanntlich kann jedes periodische Signal, also auch die oben definierten Funktionen, in der Weise rekonstruiert werden, daß das Signal zunächst vollständig harmonisch analysiert wird ("vollständig" soll heißen bis zur höchsten im Signal tatsächlich vorkommenden Ordnung, in der Regel also unendlich) und mit den so gewonnen Informationen zur Amplitude und Phasenlage einer jeden Harmonischen wiederum ein Signal synthetisiert wird. Das so gewonnene Signal ist mit dem Ausgangssignal identisch; Analyse und Synthese könnten also auch als zueinander inverse Operationen aufgefaßt werden mit der identischen Abbildung als neutralem Element.

Wesentlich in der Bestimmung der erfindungsgemäßen Phasenzuordnungszwinkels ist, daß die Analyse nur unvollständig, nämlich von der 1. bis zur x. Ordnung erfolgt, wobei x eine ganze Zahl zwischen 8 und 14, vorzugsweise zwischen 9 und 11 ist. Durch diese Beschneidung der Analyse führt die anschließende Synthese nicht mehr zum Ursprungssignal zurück.

Die Kombination dieser beiden Operationen wird im Rahmen dieser Anmeldung als Abbildung bezeichnet.

Zwar ist es durchaus üblich, bei der Bemessung von Schrittfolgen eine Fourier-Analyse zu erstellen und vor weiterer Verarbeitung zu beschneiden, dabei wird aber üblicherweise die Phaseninformation weggeschnitten und die Amplitudeninformation zumindest bis zu sehr viel größerer Ordnung berücksichtigt. Für die Geräuschoptimierung kommt es erfahrungsgemäß besonders auf die Amplituden von etwa der 50. bis zur 110. Ordnung an. Eine Besonderheit des hier vorgestellten Berechnungsverfahrens ist, daß nur etwa bis zur 10. Ordnung analysiert wird und innerhalb dieser Grenzen die Phaseninformation nicht weggeschnitten wird.

Im Begriff "Analyse" (ausführlicher: Fourier-Analyse oder harmonische Analyse) liegt die Doppeldeutigkeit, daß damit sowohl der Prozeß des Analysierens als auch das Ergebnis des Analysierens, also ein Datensatz, gemeint sein kann. Analoges gilt für die Begriffe "Synthese" und "Abbildung". Dennoch kommt es nicht zu Unklarheiten, weil im Zusammenhang jeweils klar ist, was gemeint ist; insbesondere ist im Zusammenhang mit dem Verb "sein" das jeweilige Ergebnis gemeint.

Nun zur Festlegung der Gewichtungsfaktoren: Die Summe der Gewichtungsfaktoren soll 1 betragen. Im einfachsten Falle, in dem der Reifen in eine linke und eine rechte Hälfte geteilt ist, wobei beide Hälften zur Reifenmitte - abgesehen von dem erfindungsgemäß zu bestimmenden Phasenversatz - symmetrisch sind und in der Schrittfolge übereinstimmen und wo Sturz und Vorspur der zu optimierenden Radaufhängung gleich 0 sind, also der Traganteil beider Reifenhälften an der Geasamttragkraft des Reifens gleich, nämlich gleich ½ ist, lauten beide Gewichtungsfaktoren: ½.

Läuft ein solcher Reifen unter Sturz, so trägt die fahrzeuginnere Reifenhälfte etwas mehr als die fahrzeugäußere, was bei perfekter Abstimmung eines Reifens auf ein Fahrzeug in einem etwas höheren Gewichtungsfaktor für die fahrzeuginnere Reifenhälfte zu berücksichtigen ist, zum Beispiel 0,52 zu 0,48. Diese Feinheit wirkt sich allerdings nur in dem seltenen Fall aus, in dem die Summe aller Abbildungen zwei nahezu gleichkleine relative Minima zeigt, es also zu einer Vertauschung in der Auswahl des kleinsten relativen Minimums kommen kann; aber auch dann ist die Größe (also der erreichte Spitze/Spitze-Wert, nicht der zugehörige Phasenwinkel) des kleinsten relativen Minimums praktisch unverändert. Angesichts dieser vernachlässigbaren Bedeutung und der vorherrschenden Marktforderung, einen Reifen auf allen Radpositionen und vor allem auf einer Vielzahl von Fahrzeugtypen verwenden zu können, wird nachfolgend - zumindest für nichtseitengebundene Reifentypen - vereinfachend der Sturz mit 0 angenommen. Analoges gilt für die Vorspur.

Ein in der Praxis besonders wichtiger Fall ist der, daß das Reifenprofil nicht in eine linke und rechte Hälfte geteilt ist (wie im Ausführungsbeispiel 1), sondern in einen (axial) äußeren und einen inneren Bereich. Diese bevorzugten, den Ansprüchen 5 und 6 entsprechenden Ausführungen vermeiden nahezu vollständig das Entstehen von Drehmomenten um die Hochachse des Rades beim Abrollen desselben; zwar führt der Einlauf eines besonders steifen Positivbereiches in den Latsch nicht nur zu einer Erhöhung des Radlastanteiles sondern auch des Rollwiderstandsanteiles, was insbesondere in den äußersten Positivspuren aufgrund des dort größeren Hebelarmes zur Lenkachse das Rad in eben diese Richtung einschlagen läßt, aber das gleiche spielt sich auch auf der anderen Reifenseite ab, sodaß sich beide Effekte weitestgehend kompensieren. Dadurch steht das Lenkrad - auch bei hoher Geschwindigkeit - besonders ruhig.

Falls die äußeren Positivspuren zusammen den gleichen Traglastanteil wie die inneren, die gleiche Schrittanzahl, die gleiche Querrillentiefe und die gleiche Querrillenausrichtung haben, sind auch hier beide Laufflächenbereiche - genauer gesagt deren Abbildungen - mit ½ zu gewichten.

Ist jedoch, was in wenigen Reifentypen der Fall ist, die Querrillentiefe in den inneren Positivspuren größer als in den Schulterspuren, schwankt also dort die Laufstreifensteifigkeit stärker über dem Umfang, so ist der richtige Gewichtungsfaktor der Abbildung der inneren Spuren entsprechend größer und der der äußeren kleiner. Wie sehr sich die Steifigkeitsschwankung über zunehmender Querrillentiefe vergrößert ist dem Fachmann in wenigen Minuten nach Durchlauf eines die betreffenden Laufflächenteile beschreibenden Finite-Elemente-Programmes bekannt. - Analog Umgekehrtes gilt, wo die Querrillentiefe in den Schulterspuren größer als in den inneren ist.

In vielen Reifentypen nehmen die inneren Positivspuren einen größeren Teil der Reifenbreite ein als die äußeren, sodaß der Traganteil der inneren Spuren größer als der der äußeren ist. Gemäß der Lehre des Anspruches 7 ist in einem solchen Falle der Gewichtungsfaktor der Abbildung der inneren Spuren entsprechend größer und der Gewichtungsfaktor der Abbildung der äußeren Spuren entsprechend kleiner zu bestimmen.

Bei einigen Reifen, insbesondere solchen mit Pfeilprofilen, reichen die Querrillen nicht bis zum Zenit; ein nicht durch Querrillen unterteiltes Umfangsband läuft aber auf als glatt angenommener Fahrbahn gleichmäßig ab. Angenommen 6 % der von den inneren Positivspuren insgesamt eingenommenen Reifenbreite ist nicht von Querrillen durchsetzt, so ist der Gewichtungsfaktor der inneren Spuren entsprechend (also etwa 3 %) zu mindern und der der äußeren Spuren entsprechend zu vergrößern.

Weiterhin ändert sich bei einigen Reifentypen der Schrägstellungswinkel der Querrillen über der Reifenbreite. Eine exakt quer verlaufende Rille ($\beta$=90°) mindert die örtliche Biegesteifigkeit des Laufstreifens aber stärker als eine diagonal verlaufende bei gleicher Rillenbreite. Sehr genaue Aussagen zu diesem Problem lassen sich durch die dem Fachmann geläufige Finite-Elemente-Methode gewinnen; im Bereich annähernd axial verlaufender Querrillen ($\beta$ zwischen 70° und 110°) läßt sich diese Abhängigkeit hinreichend genau durch die Einführung des Faktors cos($\beta$) berücksichtigen.

Es ist üblich in Patentanmeldungen und gerechtfertigt, um das erfindungsgemäße Optimum herum einen Toleranzbereich zu legen, damit nicht Nachahmer nur durch einen geringfügigen Verzicht Patentfreiheit genießen. Ein Toleranzbereich wie am Ende des ersten kennzeichnenden Merkmales angegeben ist überdies dadurch gerechtfertigt, daß die Aufgabenstellung der Vibrationsunterdrückung (niedriger Frequenzbereich) in schwacher Konkurrenz zu dem anderen Entwicklungsziel geringer direkter Schallabstrahlung vom Reifen und dessen Kontaktfläche zur Fahrbahn (Latsch), insbesondere dessen Subjektivbewertung steht. Vorzugsweise ist der Abstand zwischen den absoluten Extrema der Summe der Abbildungen der Funktionen der Laufflächenteile höchstens 10% größer als das erreichbare Minimum. Damit wird eine besonders weitgehende Senkung der Radialkraftschwankung erreicht und dennoch noch hinreichend viel Freiraum für eine Feinabstimmung der Phasenzuordnung im Hinblick auf das Subjektivgeräusch gelassen.

Weiterhin ist ein Toleranzbereich deshalb sinnvoll, weil sich die Lage der relativen Minima und des absoluten Minimums durch Variation des x verändert. Vorzugsweise wird die Abbildungssume nicht nur für ein x sondern für die drei - bevorzugten - Werte x=9, x=10 und x=11 bestimmt, diese überlagert und davon das absolute Minimum herausgesucht.

In der Regel ist dies in allen drei einzelnen Abbildungssummen ein relatives Minimum annähernd von der Kleinheit des jeweiligen absoluten Minimums, meistens kaum 10 % größer.

Die erfindungsgemäße Lehre fußt auf der Erkenntnis, daß ein großer Teil der zu bekämpfenden Radialkraftschwankungen durch die Variaton der Klotzlängen verursacht wird: Ein Bereich großer Klotzlängen plattet sich beim Einlauf in den Latsch mit größerem Widerstand ab als ein Bereich kleiner Klotzlängen. Entsprechend dem größeren Biegewiderstand steigt also die übertragene Radialkraft bei konstantem Abstand zwischen Drehachse und Fahrbahn bzw. Versuchstrommel bei Einlauf eines Laufflächenabschnittes großer Klotzlängen in den Latsch an und fällt umgekehrt bei Einlauf eines Laufflächenabschnittes kleiner Klotzlängen ab.

Die so bedingte Radialkraftschwankung (RKS) ist umso großer, desto größer die Profiltiefe, Härte der Lauffläche und das maximale Schrittlängenverhältnis ist und umso kleiner, desto größer der Laufflächenradius und der Luftdruck ist. Während für Radialkraftschwankungen bislang Unregelmäßigkeiten wie Fügestellen in der Karkasse und dem Gürtel verantwortlich gemacht wurden, haben die Erfinder erkannt, daß auch von der Pitch-Folge ein wesentlicher Einfluß ausgehen kann; weil RKS aufgrund von Unterbau-Unregelmäßigkeiten über dem Luftdruck steigen, ist gemäß der Erkenntnis der Erfinder durch Vergleich des RKSschriebes bei verschiedenen Luftdrücken sogar am einzelnen Reifen abschätzbar, welcher der Einflüsse überwiegt.

Abweichend von dem auf Seite 1 genannten Stand der Technik erlaubt die vorliegende Erfindung die Verwendung der gleichen Schrittfolge in gleichem Drehsinn in allen Laufflächenteilen. Damit ist, was für das Aquaplaningverhalten von Vorteil ist, eine über die gesamte Reifenbreite kontinuierliche Querrillenausbildung möglich.

Unbeschadet dessen, daß der Anmelderin die gegenständlichen Ansprüche 1 bis 4 zweckmäßiger zur Abgrenzung des beantragten Schutzumfanges für die Erfindung erscheinen als die inhaltlich analogen Verfahrensansprüche 9 bis 12 führt sie auch die Verfahrensansprüche in das Erteilungsverfahren ein, die möglicherweise verständlicher die technische Lehre beschreiben. Die Lehre der Ansprüche 5 bis 8 erscheint hingegen so klar, daß von einer Wiederholung als Verfahrensanspruch abgesehen wurde.

Obwohl es in den meisten Fällen ausreichen wird, die Lauffläche in zwei axial nebeneinanderliegende Teile zu gliedern und deren optimalen Phasenzuordnung zu berechnen, so ist eine noch feinere Elemination der Radialkraftschwankungen durch Aufteilung in eine größere Zahl von nebeneinander liegenden Teilen möglich; die Gewichtung der Abbildung eines jeden Laufflächenteiles ist dann entsprechend kleiner.

Für den ersten Iterationsschritt ist es ausreichend, die Phasenzuordnung in 2°-Schritten zu variieren. Für einen ersten Überblick über die Lage relativer Minima reichen also schon 180 Rechnungen aus; in dem bevorzugten Sonderfall, wo beide gegeneinander verdrehten Schrittfolgen identisch sind, reichen sogar schon 90 Rechnungen aus, weil das Diagramm des Abstandes der absoluten Extrema (= Spitze/Spitze-Wert) über der Phasenzuordnung zur 180°-Linie symmetrisch sein muß. Wird in drei Laufflächenteile gegliedert, so müssen zwei optimale Phasenzuordnungen (zweidimensionales Variationsproblem) bestimmt werden, wofür sich der Rechenaufwand quadriert. Entsprechend ist der oben beschriebene Rechenaufwand in die dritte Potenz zu erheben bei Aufgliederung in vier Laufflächenteile (dreidimensionales Variationsproblem); selbst dies erledigen die heute verfügbaren Rechner in einem Zeitraum unter fünf Minuten.

Insbesondere zur Unterdrückung des Lenkradflatterns bei hohen Geschwindigkeiten empfiehlt es sich, eine Symmetrie des Profiles zur Reifenmittelebene einzuhalten, was besonders leicht mit Pfeilprofilen möglich ist. Dies wird anhand des zweiten Ausführungsbeispieles, auf das sich die Figuren 5 bis 8 beziehen, näher erläutert.

Zunächst soll aber die Erfindung anhand des ersten, besonders einfachen Ausführungsbeispieles näher erläutert werden, auf welches sich die Figuren 1 bis 4 beziehen. Diesem liegt eine einzige - und zwar eine bewußt schlechte - Schrittfolge zugrunde um so besonders deutlich zeigen zu können, wieviel für die Kleinheit der Radialkraftschwankungen durch die Erfindung trotzdem noch gewonnen werden kann. Die Schrittfolge lautet:

112212111212121121111222212122212221211122
21222221211111212

Die kleinere Schrittlänge, die "1", ist wie üblich auf 1,0000 normiert, die einzige weitere Schrittlänge, die "2", betrage 1,56. Auf dieses Beispiel beziehen sich die nachfolgenden Figuren. Es zeigt:

| | |
|---|---|
| Figuren 1a und 1b | der Übersicht dienende Reifenansichten, |
| Fig. 2 | Die Funktion f und Abbildung g der oben genannten Schrittfolge und Erklärung des Begriffes "Spitze/Spitze-Wert" |
| Fig. 3 | Überlagerung (=Summenbildung) beider - in diesem Beispiel identischen - Schrittfolgen bei einem Phasenversatz von 22 Grad und |
| Fig. 4 | Diagramm des Spitze/Spitze-Wertes der Überlagerung in Abhängigkeit vom gewählten Phasenversatz. |

Figur 1a zeigt in perspektivischer Ansicht einen in zwei Laufflächenhälften teilbaren Fahrzeugreifen 1. In Figur 1b wird ein Ausschnitt aus der Profilabwicklung dieses Reifens gezeigt, wobei die beiden Laufflächenhälften 2a und 2b um eine Bogenlänge β x r gegeneinander in Umfangsrichtung U versetzt sind. Dabei ist β der erfindungsgemäß zu bestimmende Phasenversatzwinkel (falls in Grad angegeben, wie dies nachfolgend gemacht wird, ist mit 2pi/360° zu erweitern) und r der Laufflächenradiaus ist.

Weil der Laufflächenradius über der Reifenbreite schwankt, wird nachfolgend der Phasenversatz nicht als Bogenlänge, sondern als Winkel (β) um die Reifendrehachse angegeben.

Figur 2 zeigt, wie aus einer Pitchfolge, in diesem Falle der oben aufgezählten, die Funktion f, die in durchgezogener dünner Linie gezeigt ist, zu bestimmen ist: Es wird zunächst für die Schrittlänge 1 ein Abszisseneinheitsmaß willkürlich festgelegt, hier mit Rücksicht auf den vorgeschriebenen Zeichnungsrand 2,12 mm.

Der Graph beginnt bei der Position 0/1,0 und verläuft von da aus waagerecht um das Doppelte des Abszisseneinheitsmaßes nach rechts, weil die beiden ersten Profilschritte die Länge 1,00 haben.
Das Diagramm nach rechts durchlaufend springt der Graph sodann auf 1,56, der Länge der Profilschritte mit der Länge "2" und verläuft von da aus waagerecht entsprechend den zwei aufeinanderfolgenden Schritten dieser Länge um das Maß 2 x 1,56 x 2,12 mm = 6,61 mm.
Danach fällt der Graph auf 1,00 zurück entsprechend dem 5. Schritt, welcher die Länge "1" hat. Da dies keine Repetition ist, verharrt der Graph hier in der Waagerechten nur für das 1-fache des Abszisseneinheitsmaßes, also 2,12 mm.

Sodann springt der Graph entsprechend dem 6. Schritt, welcher die Länge "2" hat, auf 1,56 und verharrt dort - weil auch dies keine Repetitionsstelle ist - nur für das 1-fache des 1,56-fachen des Abszisseneinheitsmaßes, also 3,31 mm.
Sodann fällt der Graph entsprechend dem 7. bis 9. Schritt, die die Länge "1" repetieren, auf 1,00 zurück und verharrt dort für das 3-fache des Abszisseneinheitsmaßes, also 6,36 mm. Und so weiter bis die Folge genau einmal durchlaufen ist.

Der Spitze/Spitze-Wert der Funktion (=Abstand zwischen den Extrema) ist gleich der Differenz zwischen der größten und der kleinsten Schrittlänge, in diesem Beispiel 0,56.

In strichpunktierter Linie ist die Abbildung g von der Funktion f für x = 10 eingetragen. In der Regel ist der Spitze/Spitze-Wert der Abbildung größer als der der Funktion, so auch hier, nämlich A = 0,665.

Für die Pitchfolge der anderen Laufflächenhälfte ist in diesem Ausführungsbeispiel kein analoges Diagramm erforderlich, weil beide Pitch-Folgen identisch sein sollen.

Die beiden - in diesem Ausführungsbeispiel identischen - Graphen der Abbildung ga ("a" soll eine Reifenhälfte, "b" die andere symbolisieren) und gb werden nun schrittweise um einen Winkel β gegeneinander phasenverschoben. Figur 3 zeigt im oberen Bildbereich die beiden Graphen unter einem Phasenversatz von β = 22°. Da beide Laufflächenhälften gleich breit sind und sich auch in der Rillengeometrie und der Schrittfolge nicht unterscheiden, sind beide Gewichtungsfaktoren gleich, also gleich 0,5. Dementsprechend lautet die zusammengesetzte Abbildung gz:

$$gz = 0{,}5\ ga + 0{,}5\ gb$$

Der Graph der zusammengesetzten Abbildung gz ist im unteren Bildbereich dargestellt.

Ein solches Diagramm, wie in Figur 3 dargestellt, kann für jeden beliebigen Phasenversatz β geplottet werden; als Figur 3 aufgenommen wurde nur der Plott mit β = 22° , weil sich unter diesem Phasenversatz in der zusammengesetzten Abbildung gz der kleinste Spitze/Spitze-Wert, nämlich 0,356 einstellt. Gegenüber dem Phasenversatz β = 0°, wo der Spitze/Spitze-Wert aufgrund der Identität beider Schrittfolgen gleich dem Spitze/Spitze-Wert jeder einzelnen Abbildung g, also gleich 0,665 ist, ist also eine Minderung um 46,5 % erreicht.

Figur 4 soll veranschaulichen, wie sich der Spitze/Spitze-Wert der zusammengesetzten Abbildung gz in Abhängigkeit vom gewählten Phasenversatz β verhält. Man erkennt, daß es neben dem absoluten Minimum bei 22° noch ein nahezu gleich kleines relatives Minimum bei 52° gibt. Dies ist wichtig, weil häufig ein Phasenversatz größer 30°, so eine weitere Erkenntnis der Erfinder, zu einer günstigeren Subjektivbewertung des Geräusches führt.

Gemäß den beiden unabhängigen Ansprüchen 1 und 9 ist nicht nur der Phasenversatz β geschützt, in dem der Spitze/Spitze-Wert der zusammengesetzten Abbildung gz sein absolutes Minimum erreicht, sondern all die Bereiche, für die der Spitze/Spitze-Wert um höchstens 25 % größer ist; im vorliegenden Beispiel, wo das absolute Minimum 0,356 beträgt, liegt also die Schutzbereichsgrenze bei 1,25 x 0,356 = 0,445. Diese Grenze ist in der linken Hälfte des Diagramms eingezeichnet. (Wegen der Identität beider Schrittfolgen ist die rechte Hälfte zur linken spiegelverkehrt, also eigentlich überflüssig.) Auf der Abszisse ist abzulesen, daß die Winkelbereiche von 14,5° bis 31,5° und von 45° bis 60° unter diese Schutzbereichsdefinition fallen; diese Bereiche sind nach rechts steigend schraffiert.

Gemäß bevorzugter Ausführung der Erfindung wird der Phasenversatz β so gewählt, daß der tatsächliche Spitze/Spitze-Wert, also der Abstand zwischen den in Figur 3 erkennbaren Extrema der zusammengesetzten Abbildung gz, höchstens 10 % größer ist als das absolute Minimum; die entsprechende Grenze für dieses Beispiel liegt also bei 1,1 x 0,356 = 0,392 und ist in der rechten Diagrammhälfte eingezeichnet. Auf der Aszisse ist abzulesen, daß hierzu die Winkelbereiche von 17,5° bis 26° und von 50° bis 54° gehören.

Das zweite Ausführungsbeispiel wird anhand der Figuren 5 bis 8 näher erläutert. Es zeigt

Fig. 5 einen Überblick über das Laufflächenprofil,

Fig. 6 ein Diagramm der Funktion f analog Figur 2 für eine weitere Schrittfolge

Fig. 7 die Überlagerung aller drei Abbildungen zu einer zusammengesetzten Abbildung gz bei Phasenversatz 0 und

Fig. 8 die Überlagerung analog vorheriger Figur, jedoch mit den den gemäß der Erfindung optimalen Phasenversätzen.

Die Figur 5 zeigt einen Ausschnitt aus einer Abwicklung einer pfeilförmig profilierten Lauffläche 2. Das Profil ist symmetrisch zur strichpunktiert eingezeichneten Mittellinie; wegen der Symmetrie ist es ausreichend, nur die linke Hälfte detailliert zu zeichnen.

Das Profil ist in 5 Klotzspuren gegliedert, die von links nach rechts von 3 bis 7 durchnummeriert sind. In der mittleren Klotzspur 5 verlaufen die Querrillen V-förmig, in den übrigen Spuren 3, 4, 6 und 7 geradlinig in einem Winkel von 60° zur Umfangsrichtung.

Mit Rücksicht auf ein gutes Handling, das heißt eine rasche und präziese Reaktion auf Lenkbewegeungen, sind die Schulterklötze gröber geteilt als die inneren Klötze; in den beiden Schulterklotzreihen 3 und 7 ist die gleiche Schrittfolge eingesetzt, die schon aus dem ersten Ausführungsbeispiel bekannt ist und 60 Schritte aufweist. Die Darstellung der zugehörigen Funktion und Abbildung findet sich in Figur 2. In den inneren Klotzreihen ist dagegen eine Schrittfolge mit 70 Schritten eingesetzt, aber dem gleichen maximalen Schrittlängenverhältnis und ebenfalls nur zwei Schrittlängen.

Figur 6 zeigt analog der Figur 2 für diese 70er-Schrittfolge die Funktion f in dünner durchgezogener Linie und in dicker strichpunktierter Linie die zugehörige Abbildung g für x = 10.

Nun gilt es, gemäß der Erfindung gute Phasenzuordnungswinkel aufzufinden; der Übersichtlichkeit halber wird die folgende Darstellung auf die Suche der beiden besten Phasenzuordnungen beschränkt. Zunächst ist willkürlich zu wählen, welche der Positivspuren als invariant betrachtet wird und als Bezugspunkt für die beiden zu bestimmenden Winkel dient; es werden die zwischen der Mittelspur 5 und den Schulterspuren 3 und 7 befindlichen Zwischenspuren 4 und 6 als invariant betrachtet.

Figur 7 zeigt nun oben Funktion f3,7 und Abbildung g3,7 der Schulterspuren 3 und 7 in der Phasenzuordnung 0° zur Funktion f4,6 und Abbildung g4,6 der Zwischenspuren 4 und 6. Die Phasenzuordnung der Mittelspur 5 beträgt hier ebenfalls 0°.

Entsprechend den Anteilen an der Laufflächenbreite werden die beiden oberen Abbildungen g3,7 und g4,6 jeweils mit 0,4 gewichtet und die Abbildung g5 der Mittelreihe 5 mit 0,2 gewichtet. Beim Phasenversatz 0°/0° ergibt sich das unten auf der Figur stehende Diagramm für die Summe gz der zusammengesetzten Abbildung. Deren Spitze/Spitze-Wert beträgt 0,537.

Figur 8 ist analog Figur 7 aufgebaut, jedoch sind das obere und das untere der drei Abbildungsdiagramme in der Phasenzuordnung gezeigt, wo der Spitze/Spitze-Wert der zusammen gesetzten Abbildung gz minimal ist; immerhin konnte der Abstand zwischen den Extrema auf 0,265 gesenkt werden. Dazu ist die Schulterschrittfolge um 123° gegenüber der Zwischenschrittfolge (mit einem darüber stehenden Pfeil angedeutet) und die Mittelschrittfolge um 88° gegenüber der Zwischenschrittfolge (ebenfalls mit Pfeil angedeutet) in der Phasenlage verdreht worden.

Ein so optimierter Reifen 1 leitet nicht nur besonders geringe Vibrationen in die Radaufhängung ein sondern läßt zudem aufgrund der Phasengleichheit zwischen den Spuren 3 und 7 und zwischen den Spuren 4 und 6 die Lenkung praktisch völlig frei von jeder reifenbedingten Vibration.

Der Schutz für die offenbarte Erfindung ist nicht auf die dargestellten Ausführungsbeispiele beschränkt sondern erfaßt alle den aufgezeigten Ideen folgenden Ausführungen gemäß den unabhängigen Ansprüchen 1 und 9.

## Patentansprüche

**1.** Fahrzeugreifen (1) mit einer profilierten Lauffläche (2), auf deren Umfang Profilschritte (pitches) mindestens zweier unterschiedlicher Längen (11, 12) angeordnet sind, wobei die Lauffläche (2) axial in mehrere Teile (2a, 2b) unterteilt ist und die aufeinanderfolgenden Schrittlängen in jedem der axialen Teile (2a, 2b) eine Schrittfolge bilden,
**dadurch gekennzeichnet,**

- daß die Phasenzuordnung zwischen den Schrittfolgen der verschiedenen Laufflächenteile (2a, 2b) so bemessen ist, daß der Abstand (A) zwischen den absoluten Extrema der Summe (gz) der gewichteten Abbildungen (ga, gb) je einer Funktion (fa bzw. fb) minimal ist oder höchstens 25 % größer als dieses Minimum ist,
- wobei jedem Laufflächenteil (2a, 2b) eine Funktion (fa bzw. fb) zugeordnet ist, welche die aneinander anschließende Abtragung der gemäß der Schrittfolge aufeinander folgenden Schrittlängen (11, 11, 12, 12, 11, 12, ... ) des betreffenden Laufflächenteiles (2a bzw. 2b) auf der Abszisse bei Abtragung der jeweiligen Schrittlänge (11 bzw. 12) von der Abszisse aus auf der Ordinate ist;
- wobei die Abbildung (ga bzw. gb) einer jeden Funktion (fa bzw. fb) die amplituden- und phasengerechte Synthese der Fourieranalyse der Funktion (fa bzw. fb) von der 1. bis zur x. Harmonischen ist;
- wobei x eine ganze Zahl zwischen 8 und 14 ist;
- und die Gewichtungsfaktoren vor den zu addierenden Abbildungen in der Summe 1 ergeben.

**2.** Fahrzeugreifen (1) nach Anspruch 1 dadurch gekennzeichnet, daß x eine ganze Zahl zwischen 9 und 11 ist.

**3.** Fahrzeugreifen (1) nach Anspruch 1 dadurch gekennzeichnet, daß der Abstand (A) zwischen den absoluten Extremwerten der Summe (gz) der Abbildungen (ga, gb) der Funktionen (fa, fb) höchstens 10% größer als das Minimum ist.

**4.** Fahrzeugreifen (1) nach Anspruch 1 wobei die aufeinander folgenden Schrittlängen in jedem der axialen Teile (2a, 2b) eine Schrittfolge bilden, dadurch gekennzeichnet, daß alle Schrittfolgen der axialen Teile (2a, 2b) abgesehen von ihrer Phasenlage identisch sind.

**5.** Fahrzeugreifen (1) nach einem der vorangehenden Ansprüche dadurch gekennzeichnet, daß zumindest seine beiden axial äußersten Positivspuren (3, 7) die gleiche Schrittfolge zeigen und praktisch phasengleich - d. h. mit einem Phasenversatz von höchsten 2° - zueinander angeordnet sind.

**6.** Fahrzeugreifen (1) nach Anspruch 5 dadurch gekennzeichnet, daß jede außermittig liegende Positivspur (4) der einen Reifenseite (L) mit einer im gleichen Abstande auf der anderen Seite (R) der Reifenmitte (M) liegenden Positivspur (6) so gepaart ist, daß sie (4, 6) die gleiche Schrittfolge zeigen und praktisch phasengleich zueinander liegen.

**7.** Fahrzeugreifen (1) nach einem der vorangehenden Ansprüche dadurch gekennzeichnet, daß die Gewichtungsfaktoren der einzelnen Abbildungen proportional sind zum Produkt des jeweiligen Traganteiles mal der Axialerstreckung dieser Querrillen (8) ggf. mal dem Cosinus des Schrägstellungswinkels der Querrillen (8) zur Reifenumfangsrichtung (U) in den zugeordneten Positivspuren.

**8.** Fahrzeugreifen (1) nach einem der vorangehenden Ansprüche dadurch gekennzeichnet, daß der Phasenversatz (β) größer 30° ist.

**9.** Verfahren zum Bemessen des optimalen Phasenversatzes zwischen mindestens zwei axial nebeneinander angeordneten Laufflächenteilen (2a, 2b) eines Fahrzeugreifens (1), wobei in jedem Laufflächenteil das Reifenprofil ungleichmäßig entsprechend einer Schrittfolge (pitch sequence) geteilt ist **dadurch gekennzeichnet,**

- daß zunächst für jeden Laufflächenteil (2a, 2b) eine Funktion (fa bzw. fb) bestimmt wird durch aneinander anschließende Abtragung der aufeinander folgenden Pitches (p1, p2, ... pn, n = Pitchanzahl im betreffenden Laufflächenteil) unterschiedlicher Längen (11, 12) des betreffenden Laufflächenteiles (2a) auf der Abszisse bei Abtragung der jeweiligen Pitchlänge von der Abszisse aus auf der Ordinate,
- danach alle Funktionen (fa, fb) harmonisch analysiert werden von der 1. bis zur x. Ordnung, wobei x eine ganze Zahl zwischen 8 und 14 ist,
- und danach für jede Funktion (fa bzw. fb) eine Abbildung in der Weise bestimmt wird, daß sie die Synthese ist, die exakt zur Gesamtheit der zuvor gewonnenen Analyse-Daten gehört (also nicht nur zur Amplituden- sondern auch zur Phaseninformation!)
- daß die Phasenzuordnung zwischen den Pitchfolgen der verschiedenen Laufflächenteile (2a, 2b) - z. B. durch Iterationsrechnung - bestimmt wird, bei dem der Abstand zwischen den absoluten Extremwerten der Summe der gewichteten Abbildungen (ga bzw. gb) der Funktionen (fa, fb) minimal ist oder höchstens 25% größer als dieses Minimum ist
- und, daß schließlich die gemäß vorstehendem Verfahren bestimmte Phasenzuordnung in der Vulkanisationsform realisiert wird, zum Beispiel durch entsprechendes Verdrehen einer Formoberhälfte und einer Formunterhälfte gegeneinander.

**10.** Verfahren nach Anspruch 9 dadurch gekennzeichnet, daß x eine ganze Zahl zwischen 9 und 11 ist.

**11.** Verfahren nach Anspruch 9 dadurch gekennzeichnet, daß der Phasenversatz so gewählt wird, daß der Abstand zwischen den absoluten Extremwerten der Summe der Fourieranalysen der Funktionen (fa, fb) der Laufflächenteile (2a, 2b) höchstens 10% größer als das Minimum ist.

**12.** Verfahren nach Anspruch 9 dadurch gekennzeichnet, daß alle Schrittfolgen der axialen Teile (2a, 2b) abgesehen von ihrer Phasenlage identisch sind.

## Claims

**1.** Vehicle tyre (1), having a profiled tread surface (2), on the periphery of which are disposed profile steps (pitches) of at least two different lengths (11, 12), the tread surface (2) being divided axially into a plurality of portions (2a, 2b), and the successive step lengths in each of the axial portions (2a, 2b) forming a step sequence,
characterised in that

- the phase association between the step sequences of the various tread surface portions (2a, 2b) is so dimensioned that the spacing (A) between the absolute extremes of the sum (gz) of the calibrated images (ga, gb) of each function (fa or fb respectively) is minimal or, at most, 25 % greater than this minimum,
- each tread surface portion (2a, 2b) having associated therewith a function (fa or fb respectively), which is the consecutive plotting of the step lengths (11, 11, 12, 12, 11, 12, ...), which follow one another according to the sequence, of the pertinent tread surface portion (2a or 2b respectively) on the abscissa by plotting the respective step length (11 or 12 respectively) from the abscissa on the ordinate;

- the image (ga or gb respectively) of each function (fa or fb respectively) being the true amplitude and phase synthesis of the Fourier analysis of the function (fa or fb respectively) from the 1st to the xth harmonic;
- x being a whole number between 8 and 14;
- and the calibration factors before the images to be added resulting in the sum 1.

**2.** Vehicle tyre (1) according to claim 1, characterised in that x is a whole number between 9 and 11.

**3.** Vehicle tyre (1) according to claim 1, characterised in that the spacing (A) between the absolute extreme values of the sum (gz) of the images (ga, gb) of the functions (fa, fb) is, at most, 10 % greater than the minimum.

**4.** Vehicle tyre (1) according to claim 1, wherein the successive step lengths in each of the axial portions (2a, 2b) form a step sequence, characterised in that all of the step sequences of the axial portions (2a, 2b), apart from their phase position, are identical.

**5.** Vehicle tyre (1) according to one of the preceding claims, characterised in that at least its two axially outermost positive tracks (3, 7) exhibit the same step sequence and are disposed in a practically phase-identical manner relative to one another - i.e. with a maximum offset phase arrangement of 2°.

**6.** Vehicle tyre (1) according to claim 5, characterised in that each eccentrically situated positive track (4) of one tyre side (L) is paired with a positive track (6), which lies at the same spacing on the other side (R) of the tyre centre (M), in such a manner that they (4, 6) exhibit the same step sequence and lie in a practically phase-identical manner relative to one another.

**7.** Vehicle tyre (1) according to one of the preceding claims, characterised in that the calibration factors of the individual images are proportional to the product of the respective supporting proportion of contact area times the axial extension of these transverse grooves (8), or respectively times the cosine of the angle of the inclined position of the transverse grooves (8) relative to the circumferential direction (U) of the tyre in the associated positive tracks.

**8.** Vehicle tyre (1) according to one of the preceding claims, characterised in that the offset phase arrangement (β) is greater than 30°.

**9.** Method of measuring the optimum offset phase arrangement between at least two tread surface portions (2a, 2b) of a vehicle tyre (1), which portions are disposed axially adjacent each other, wherein the tyre profile is non-uniformly divided in each tread surface portion according to a step sequence (pitch sequence),
characterised

- in that a function (fa or fb respectively) is initially determined for each tread surface portion (2a, 2b) by consecutively plotting the successive pitches (p1, p2, ... pn, n = pitch number in the pertinent tread surface portion) of variable lengths (11, 12) of the pertinent tread surface portion (2a) on the abscissa by plotting the respective pitch length from the abscissa on the ordinate,
- then all of the functions (fa, fb) are harmonically analysed from the order of 1 to the order of x, x being a whole number between 8 and 14,
- and then, for each function (fa or fb respectively), an image is determined in such a manner that it is the synthesis which belongs exactly to the entirety of the previously obtained analysis data (that is to say not only to the amplitude information but also to the phase information!),
- in that the phase association between the pitch sequences of the various tread surface portions (2a, 2b) is determined - e.g. by iteration calculation - wherein the spacing between the absolute extreme values of the sum of the calibrated images (ga and gb respectively) of the functions (fa, fb) is minimal or, at most, 25 % greater than this minimum,
- and in that finally the phase association determined according to the above method is realised in the vulcanising mould, for example by appropriately twisting one upper mould half and one lower mould half relative to each other.

**10.** Method according to claim 9, characterised in that x is a whole number between 9 and 11.

**11.** Method according to claim 9, characterised in that the offset phase arrangement is so selected that the spacing between the absolute extreme values of the sum of the Fourier analyses of the functions (fa, fb) of the tread surface portions (2a, 2b) is, at most, 10 % greater than the minimum.

**12.** Method according to claim 9, characterised in that all of the step sequences of the axial portions (2a, 2b), apart from their phase position, are identical.

## Revendications

1. Pneumatique de véhicule (1) comprenant une bande de roulement profilée (2) sur la périphérie de laquelle sont prévus des pas de sculpture (pitches) d'au moins deux longueurs différentes (11, 12), la bande de roulement (2) étant divisée axialement en plusieurs parties (2a, 2b) et les longueurs de pas successives formant une suite de pas dans chacune des parties axiales (2a, 2b), caractérisé en ce que

   - la coordination de phase entre les suites de pas des différentes parties (2a, 2b) de la bande de roulement est fixée de manière que la distance (A) entre les extrêmes absolues de la somme (gz) des représentations pondérées (ga, gb) de fonctions respectives (fa, fb respectivement) soit minimale ou tout au plus supérieure de 25 % à ce minimum,
   - avec coordination à chaque partie (2a, 2b) de la bande de roulement d'une fonction (fa, fb respectivement) obtenue en portant successivement en abscisse les pas qui se suivent de la partie concernée de la bande de roulement et en reportant chaque fois en ordonnée la longueur de pas associée;
   - la représentation (ga, gb respectivement) de chaque fonction (fa, fb respectivement) étant la synthèse, avec respect de l'amplitude et de la phase, de l'analyse de Fourier de la fonction (fa, fb respectivement) à partir du premier harmonique jusqu'au x-ième harmonique;
   - x étant un nombre entier entre 8 et 14;
   - et les facteurs de pondération des représentations à additionner correspondant à une somme de 1.

2. Pneumatique de véhicule (1) selon la revendication 1, caractérisé en ce que x est un nombre entier entre 9 et 11.

3. Pneumatique de véhicule (1) selon la revendication 1, caractérisé en ce que la distance (A) entre les valeurs extrêmes absolues de la somme (gz) des représentations (ga, gb) des fonctions (fa, fb) est tout au plus supérieure de 10 % audit minimum.

4. Pneumatique de véhicule (1) selon la revendication 1 et sur lequel les longueurs de pas qui se suivent dans chacune des parties axiales (2a, 2b) forment une suite de pas, caractérisé en ce que toutes les suites de pas des parties axiales (2a, 2b) sont identiques hormis leur position de phase.

5. Pneumatique de véhicule (1) selon une des revendications précédentes, caractérisé en ce que tout au moins ses deux pistes positives de sculpture extrêmes dans le sens axial (3, 7) présentent la même suite de pas et sont disposées pratiquement à égalité de phase l'une par rapport à l'autre, c'est-à-dire avec un déphasage d'au maximum 2°.

6. Pneumatique de véhicule (1) selon la revendication 5, caractérisé en ce que chaque piste positive (4) située en dehors du milieu et appartenant à un côté (gauche) du pneu, est appariée avec une piste positive (6) située à la même distance sur l'autre côté (droit) du milieu (M) du pneu, de manière qu'elles (4, 6) présentent la même suite de pas et soient disposées pratiquement à égalité de phase l'une par rapport à l'autre.

7. Pneumatique de véhicule (1) selon une des revendications précédentes, caractérisé en ce que les facteurs de pondération des différentes représentations sont proportionnels au produit de la fraction portante concernée et de l'étendue axiale des rainures transversales (8) coordonnées, ainsi que, éventuellement, du cosinus de l'angle d'obliquité des rainures transversales (8) par rapport à la direction périphérique (U) du pneumatique dans les pistes positives coordonnées.

8. Pneumatique de véhicule (1) selon une des revendications précédentes, caractérisé en ce que le déphasage (β) est supérieur à 30°.

9. Procédé pour déterminer le déphasage optimal entre au moins deux parties (2a, 2b) axialement juxtaposées de la bande de roulement d'un pneumatique de véhicule (1), le profil de pneu dans chaque partie de la bande de roulement étant divisé de façon irrégulière en conformité avec une suite de pas (pitch sequence), caractérisé en ce que

   - on détermine d'abord, pour chaque partie (2a, 2b) de la bande de roulement, une fonction (fa, fb respectivement) obtenue en portant successivement en abscisse les pas qui se suivent (p1, p2, .... pn, n étant le nombre de pas dans la partie concernée de la bande de roulement) de différentes longueurs (11, 12) de la partie concernée (2a) de la bande de roulement et en reportant chaque fois en ordonnée la longueur de pas associée,
   - on soumet ensuite toutes les fonctions (fa, fb) du premier au x-ième ordre à une analyse harmonique, x étant un nombre entier entre 8 et 14,
   - et on détermine après cela une représentation pour chaque fonction (fa, fb respectivement), de manière qu'elle soit la synthèse correspondant exactement à la totalité des données d'analyse obtenues précédemment (donc non seulement en ce qui concerne l'information d'amplitude, mais aussi en ce qui concerne l'information de phase!);

- que l'on détermine la coordination de phase entre les suites de pas des différentes parties (2a, 2b) de la bande de roulement - par exemple par calcul itératif - de manière que la distance entre les valeurs extrêmes absolues de la somme des représentations pondérées (ga, gb respectivement) des fonctions (fa, fb) soit minimale ou tout au plus supérieure de 25 % à ce minimum;
- et que, enfin, on met en oeuvre la coordination de phase, déterminée selon le procédé ci-dessus, dans le moule de vulcanisation, par exemple par une rotation correspondante d'un demi-moule supérieur et d'un demi-moule inférieur l'un par rapport à l'autre.

**10.** Procédé selon la revendication 9, caractérisé en ce que x est un nombre entier entre 9 et 11.

**11.** Procédé selon la revendication 9, caractérisé en ce que l'on choisit le déphasage de manière que la distance entre les valeurs extrêmes absolues de la somme des analyses de Fourier des fonctions (fa, fb) des parties (2a, 2b) de la bande de roulement soit tout au plus supérieure de 10 % audit minimum.

**12.** Procédé selon la revendication 9, caractérisé en ce que toutes les suites de pas des parties axiales (2a, 2b) sont identiques hormis la position de phase.

FIG. 1a

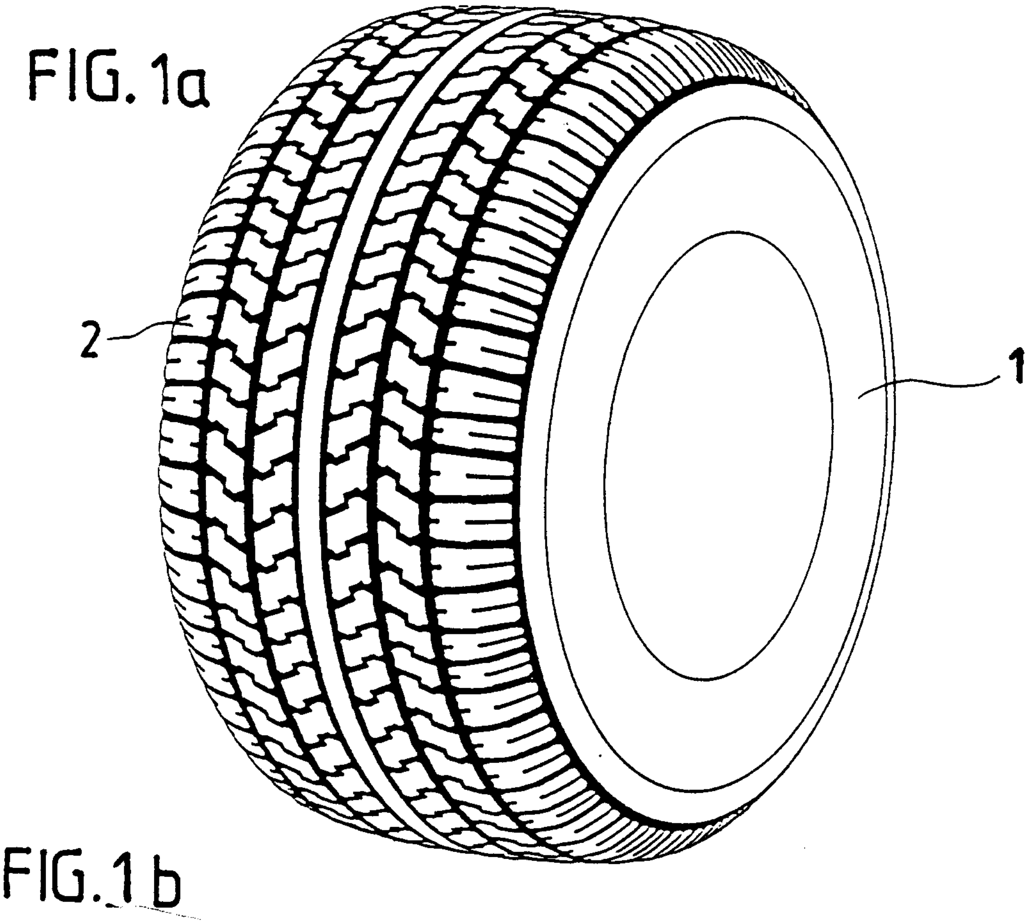


FIG. 1b

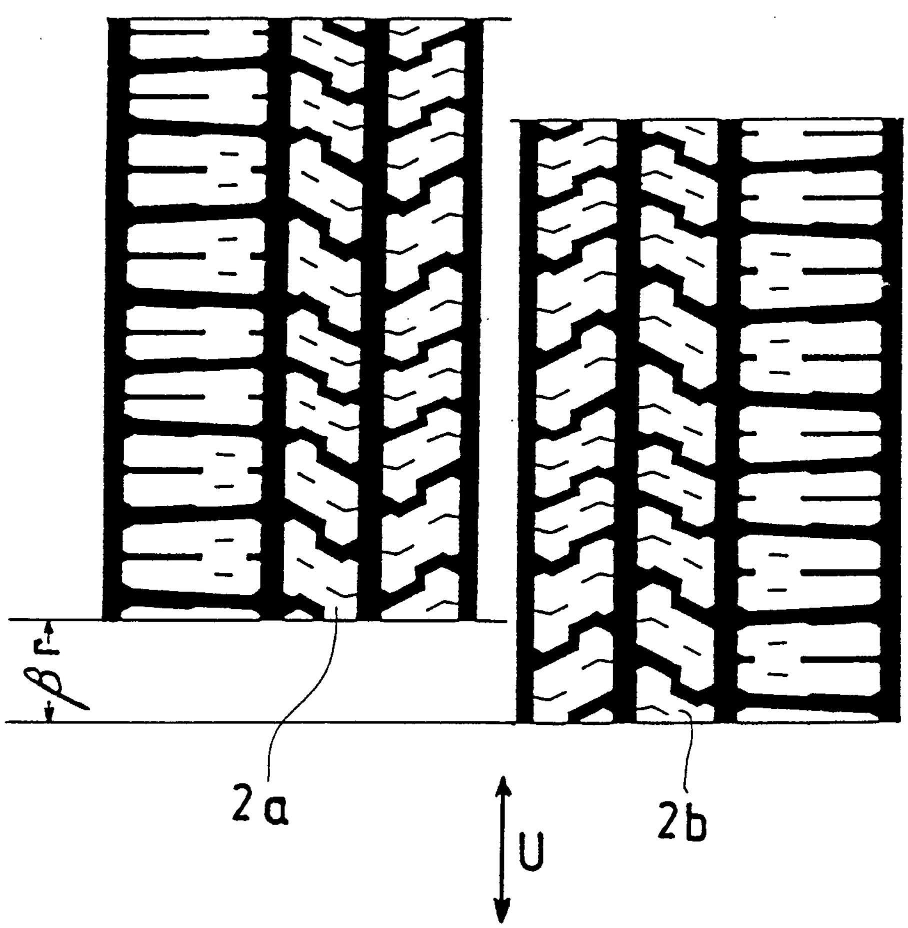

FIG. 2

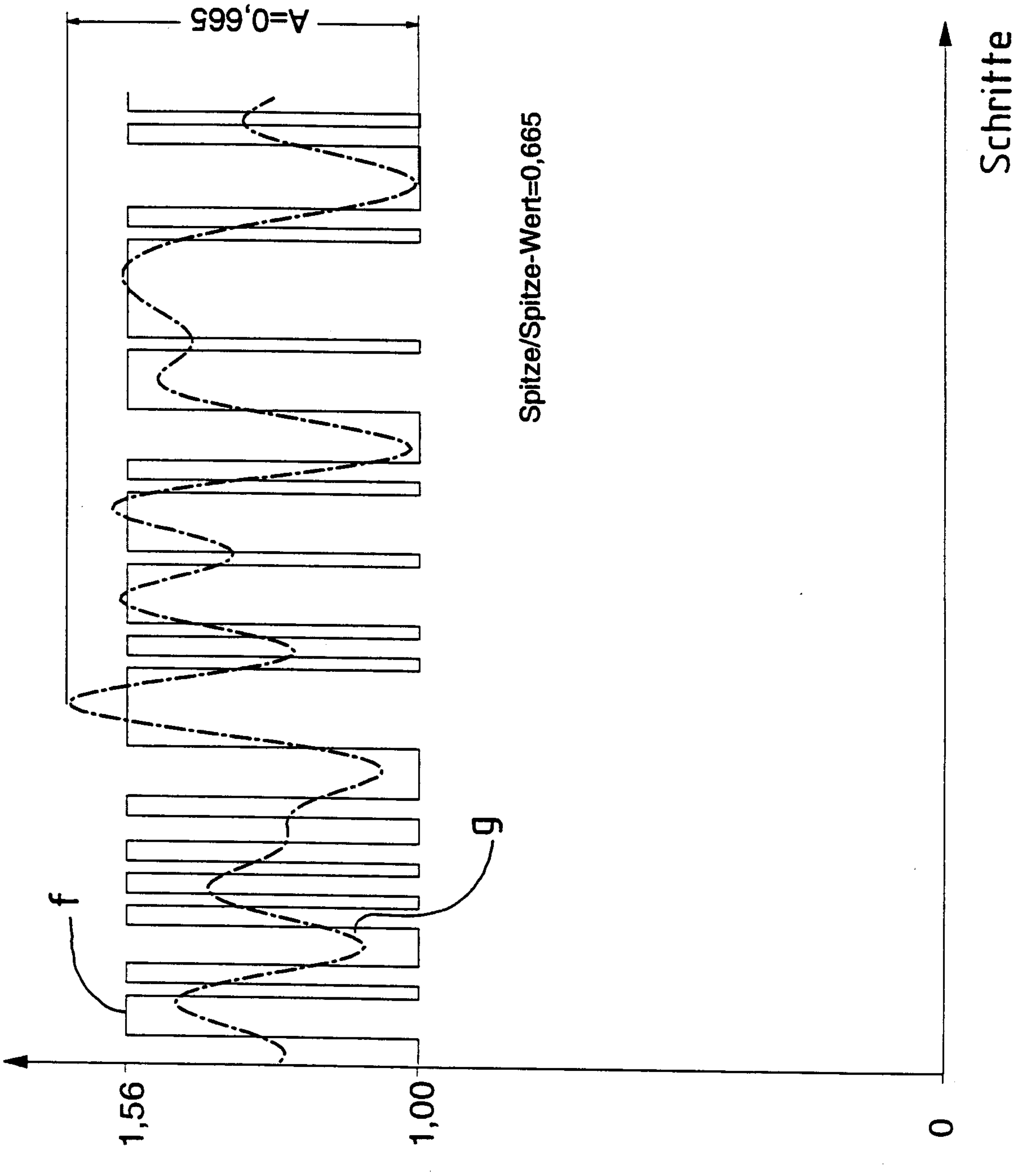

FIG. 3

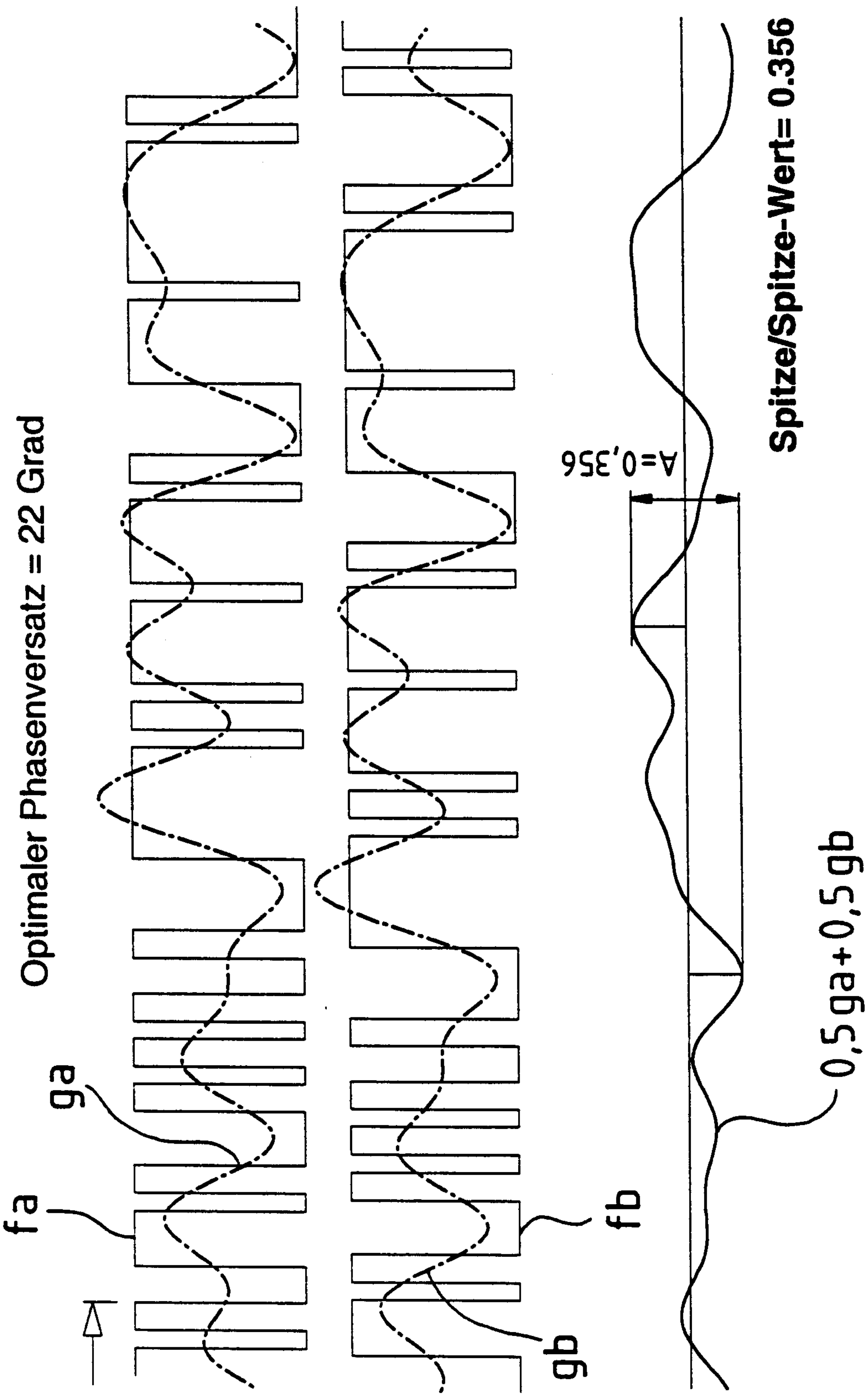
Optimaler Phasenversatz = 22 Grad
fa
ga
fb
gb
A=0,356
0,5 ga+0,5 gb
Spitze/Spitze-Wert= 0.356

FIG. 4

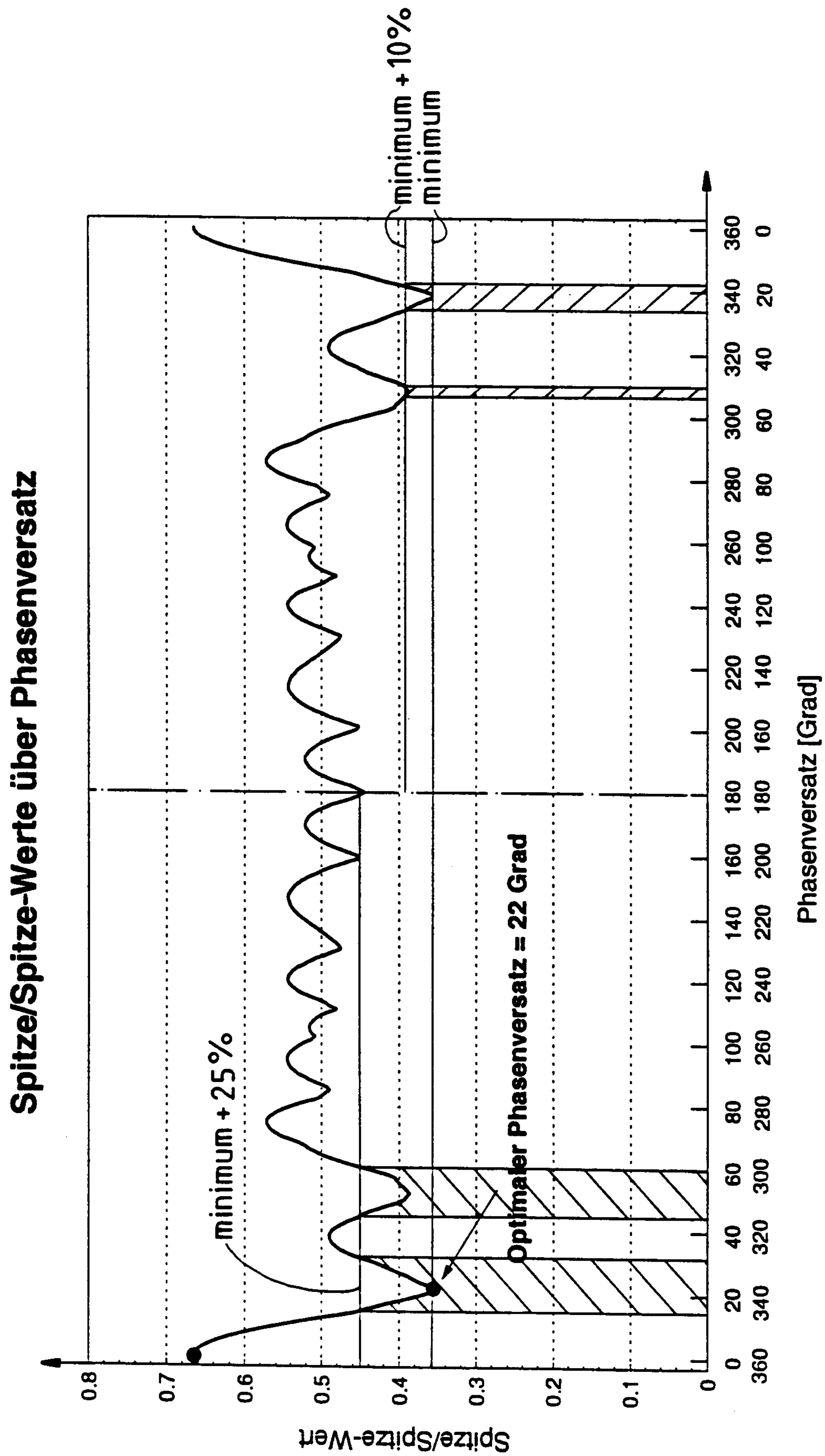
Spitze/Spitze-Werte über Phasenversatz
Spitze/Spitze-Wert
0.8
0.7
0.6
0.5
0.4
0.3
0.2
0.1
0
minimum + 25%
minimum + 10%
minimum
Optimaler Phasenversatz = 22 Grad
0 20 40 60 80 100 120 140 160 180 200 220 240 260 280 300 320 340 360
360 340 320 300 280 260 240 220 200 180 160 140 120 100 80 60 40 20 0
Phasenversatz [Grad]

FIG. 5

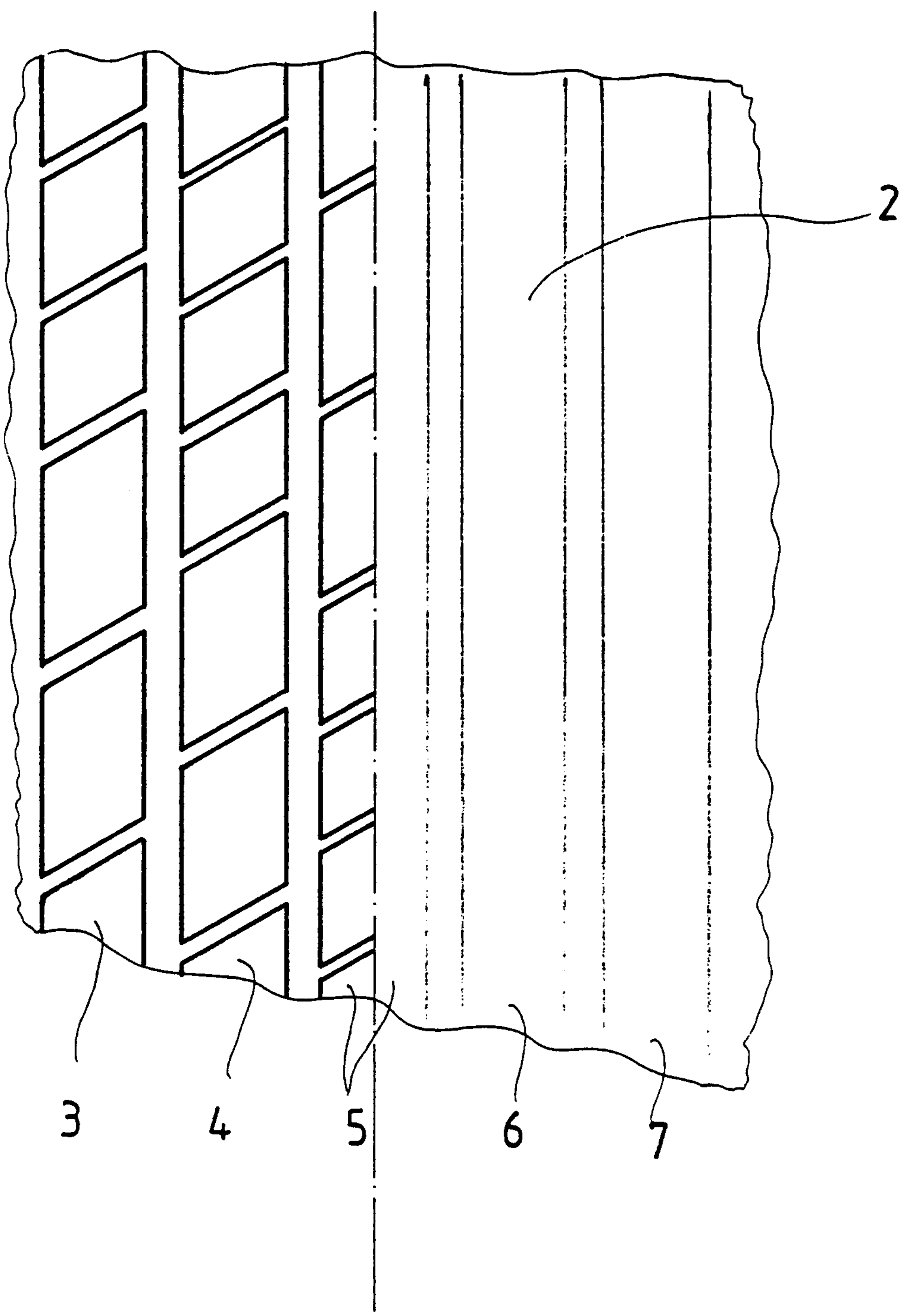

FIG. 6

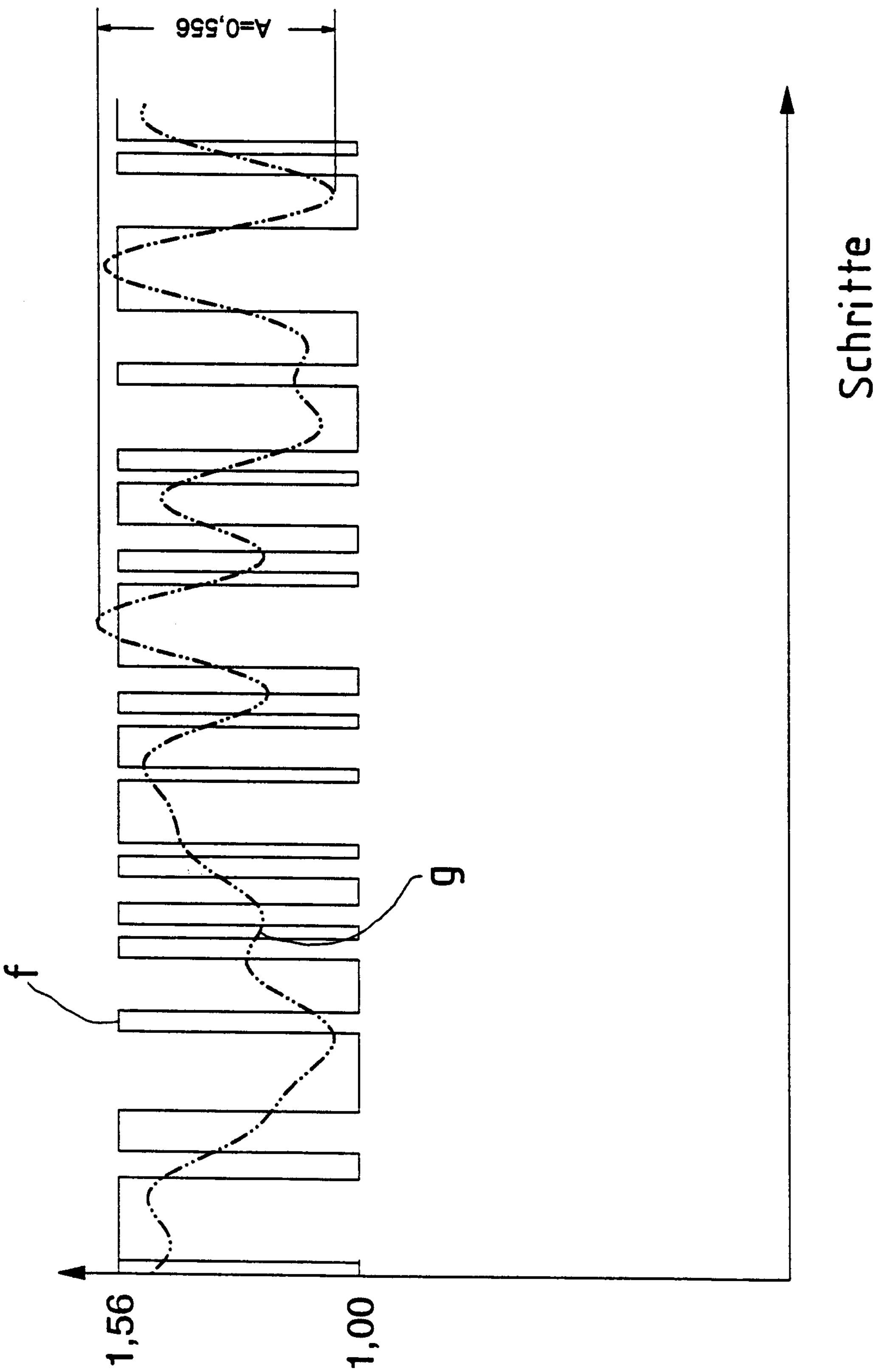

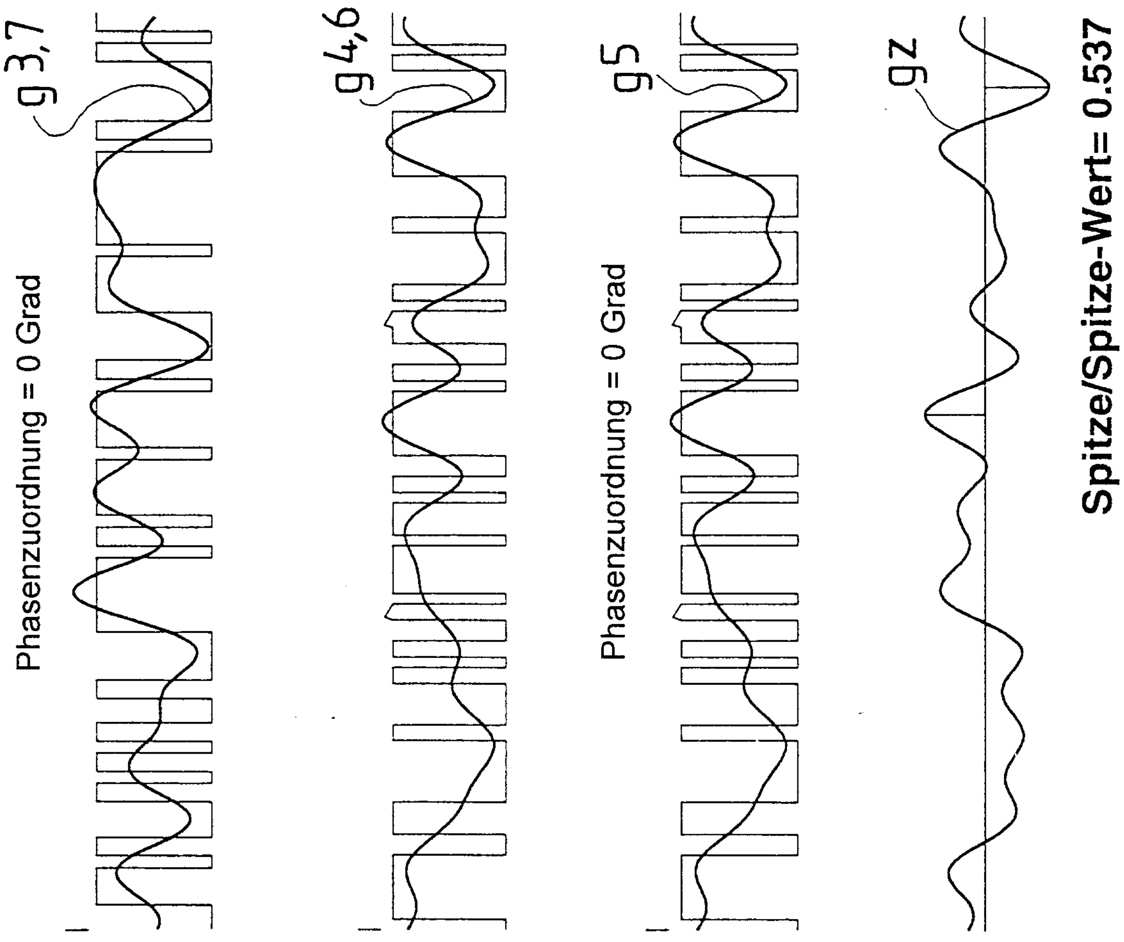
g3,7
Phasenzuordnung = 0 Grad
g4,6
g5
Phasenzuordnung = 0 Grad
gz
Spitze/Spitze-Wert= 0.537

FIG. 7

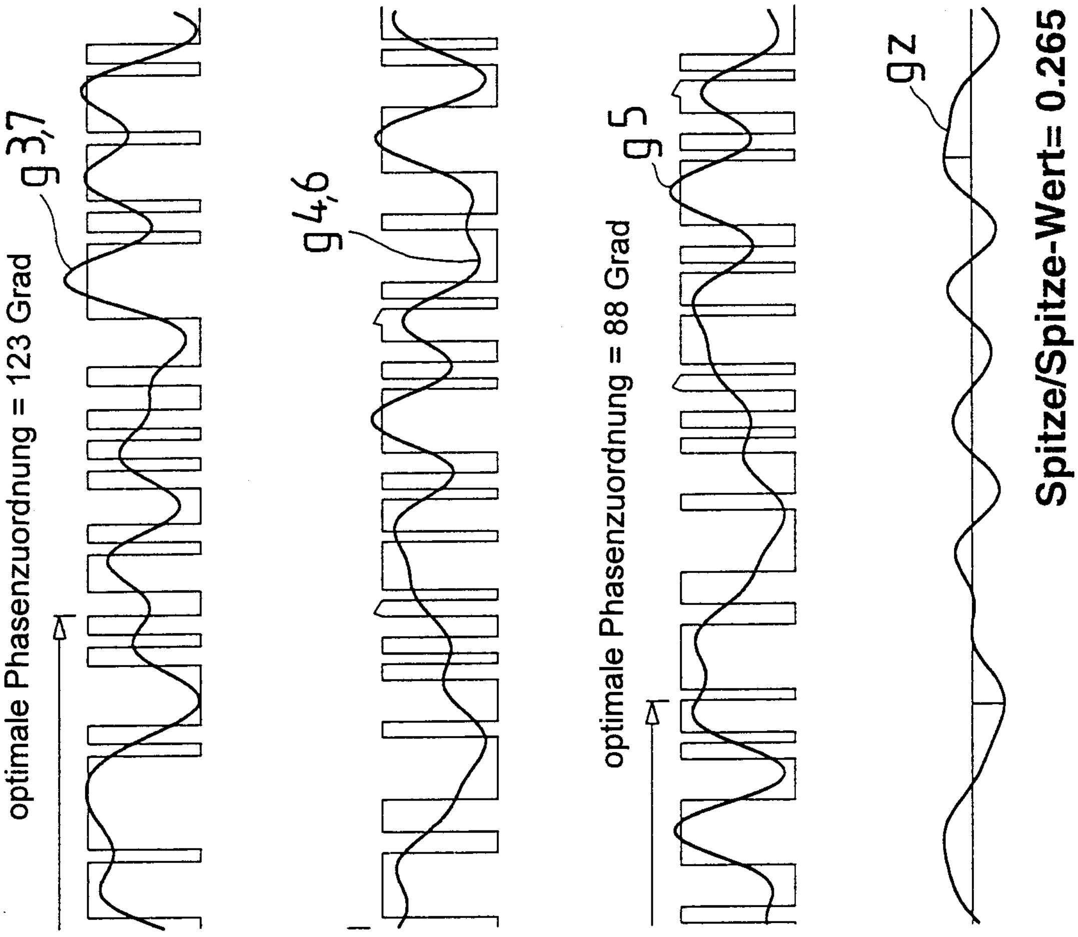
optimale Phasenzuordnung = 123 Grad
g3,7
g4,6
optimale Phasenzuordnung = 88 Grad
g5
gz
Spitze/Spitze-Wert= 0.265

FIG. 8